# EUROPÄISCHE PATENTSCHRIFT

(11) **EP 3 117 632 B1**
(45) Veröffentlichungstag und Bekanntmachung des Hinweises auf die Patenterteilung: **29.04.2020**
(21) Anmeldenummer: 15735844.1
(22) Anmeldetag: 13.03.2015
(51) Int. Cl.: H04S 7/00, G09B 5/04, G09B 5/12

(54) **MOBILE VORRICHTUNG FÜR IMMERSIVE SOUNDERLEBNISSE**
MOBILE DEVICE FOR IMMERSIVE SOUND EXPERIENCES
DISPOSITIF MOBILE POUR D'EXPÉRIENCES SONORES IMMERSIVES

(30) Priorität: 13.03.2014 DE 102014204630
(43) Veröffentlichungstag der Anmeldung: 18.01.2017
(73) Patentinhaber: Framed Immersive Projects GmbH & Co. Kg, 10243 Berlin (DE)
(72) Erfinder: ARMBRUSTER, Steffen, 10243 Berlin (DE)
(74) Vertreter: Ostertag & Partner Patentanwälte mbB
(86) Internationale Anmeldenummer: PCT/EP2015/000553
(87) Internationale Veröffentlichungsnummer: WO 2015/144293

(56) Entgegenhaltungen:
- EP-A1- 2 214 425
- EP-A1- 2 214 425
- WO-A1-03/049315
- WO-A1-2012/166355
- WO-A1-2012/166355
- WO-A1-2012/166355
- WO-A2-2005/032209
- WO-A2-2005/032209
- DE-A1-102004 057 959
- DE-A1-102004 057 959
- DE-A1-102006 014 176
- DE-A1-102006 014 176
- US-A1- 2013 236 040
- US-A1- 2013 236 040
- MIAO ZHANG ET AL: "Robust height tracking by proper accounting of nonlinearities in an integrated UWB/MEMS-based-IMU/baro system", PROCEEDINGS OF THE 2012 IEEE/ION POSITION, LOCATION AND NAVIGATION SYMPOSIUM, 1. April 2012 (2012-04-01), Seiten 414-421, XP055216629, DOI: 10.1109/PLANS.2012.6236910 ISBN: 978-1-46-730386-6
- ECKEL G ED - THWAITES H ET AL: "The vision of the LISTEN project", VIRTUAL SYSTEMS AND MULTIMEDIA, 2001. PROCEEDINGS. SEVENTH INTERNATION AL CONFERENCE ON BERKELEY, CA, USA 25-27 OCT. 2001, LOS ALAMITOS, CA, USA,IEEE COMPUT. SOC, US, 25. Oktober 2001 (2001-10-25), Seiten 393-396, XP010567104, DOI: 10.1109/VSMM.2001.969694 ISBN: 978-0-7695-1402-4
- PAVEL ZIKOVSKY AND BERNARD HORAN: "System for aural augmented reality", RESEARCH DISCLOSURE, KENNETH MASON PUBLICATIONS, HAMPSHIRE, UK, GB, Bd. 550, Nr. 2, 1. Februar 2010 (2010-02-01), Seite 125, XP007139596, ISSN: 0374-4353
- KARIN FAHLQUIST ET AL: "Social Media Game Concept within the Digital Zoo: New Ways of Connecting a Tourist Attraction with Its Visitors", INTERNET OF THINGS (ITHINGS/CPSCOM), 2011 INTERNATIONAL CONFERENCE ON AND 4TH INTERNATIONAL CONFERENCE ON CYBER, PHYSICAL AND SOCIAL COMPUTING, IEEE, 19. Oktober 2011 (2011-10-19), Seiten 170-177, XP032107150, DOI: 10.1109/ITHINGS/CPSCOM.2011.100 ISBN: 978-1-4577-1976-9
- MIAO ZHANG ET AL: "Robust height tracking by proper accounting of nonlinearities in an integrated UWB/MEMS-based-IMU/baro system", PROCEEDINGS OF THE 2012 IEEE/ION POSITION, LOCATION AND NAVIGATION SYMPOSIUM, 1. April 2012 (2012-04-01), Seiten 414-421, XP055216629, DOI: 10.1109/PLANS.2012.6236910 ISBN: 978-1-46-730386-6
- MIAO ZHANG ET AL: "Robust height tracking by proper accounting of nonlinearities in an integrated UWB/MEMS-based-IMU/baro system", PROCEEDINGS OF THE 2012 IEEE/ION POSITION, LOCATION AND NAVIGATION SYMPOSIUM, 1 April 2012 (2012-04-01), pages 414-421, XP055216629, DOI: 10.1109/PLANS.2012.6236910 ISBN: 978-1-46-730386-6
- ECKEL G ED - THWAITES H ET AL: "The vision of the LISTEN project", VIRTUAL SYSTEMS AND MULTIMEDIA, 2001. PROCEEDINGS. SEVENTH INTERNATION AL CONFERENCE ON BERKELEY, CA, USA 25-27 OCT. 2001, LOS ALAMITOS, CA, USA,IEEE COMPUT. SOC, US, 25 October 2001 (2001-10-25), pages 393-396, XP010567104, DOI: 10.1109/VSMM.2001.969694 ISBN: 978-0-7695-1402-4
- PAVEL ZIKOVSKY AND BERNARD HORAN: "System for aural augmented reality", RESEARCH DISCLOSURE, KENNETH MASON PUBLICATIONS, HAMPSHIRE, UK, GB, vol. 550, no. 2, 1 February 2010 (2010-02-01), page 125, XP007139596, ISSN: 0374-4353
- KARIN FAHLQUIST ET AL: "Social Media Game Concept within the Digital Zoo: New Ways of Connecting a Tourist Attraction with Its Visitors", INTERNET OF THINGS (ITHINGS/CPSCOM), 2011 INTERNATIONAL CONFERENCE ON AND 4TH INTERNATIONAL CONFERENCE ON CYBER, PHYSICAL AND SOCIAL COMPUTING, IEEE, 19 October 2011 (2011-10-19), pages 170-177, XP032107150, DOI: 10.1109/ITHINGS/CPSCOM.2011.100 ISBN: 978-1-4577-1976-9

## Beschreibung

Die vorliegende Erfindung betrifft eine mobile Vorrichtung, ein System zur Verortung akustischer Signale in einem realen Raum sowie ein entsprechendes Verfahren.

Es sind für Museumsbesuche sogenannte Audioguides bekannt, die von Besuchern getragen werden und an einzelnen Exponaten passende Informationen wiedergeben. Der Besucher trägt hierbei einen mit dem Audioguide verbundenen Kopfhörer, tritt mit dem Audioguide vor ein Exponat, gibt eine an dem Exponat angebrachte Nummer ein und der Audioguide spielt beispielsweise eine entsprechende gesprochene Information über den Kopfhörer ab. Alternativ gibt es Audioguidesysteme, bei denen man den Audioguide vor einen Sensor bewegt, um so die Wiedergabe der Informationen zu aktivieren. Neueste Audioguidesysteme arbeiten mit Infrarotsignalen, sodass der Audioguide automatisch erkennt, wenn sich der Besucher mit dem Audioguide vor einem Exponat befindet und so die Wiedergabe starten kann. Daneben existieren Audioguidesysteme, die erkennen, wenn ein Benutzer mit einem solchen Audioguide einen bestimmten Raum betritt. Mit dem Betreten wird eine dem Raum zugehörige Tonsequenz zum Abspielen gebracht.

Diese Systeme weisen eine nur eingeschränkte Zuordnung von Tonsequenz oder gesprochener Information und Exponat auf. Ist ein aktive Handeln des Benutzers wie in dem Fall der Zifferneingabe notwendig, kann der Benutzer zwar ohne Weiteres die Verbindung zwischen abgespielter Information und Exponat erkennen, die Bedienung ist aber umständlich, wenig intuitiv und auf Dauer ermüdend.

Bei einer automatische startenden Wiedergabe hingegen ist für den Benutzer unter Umständen die Verbindung zwischen der abgespielten Information und dem Exponat nicht ohne Weiteres erkennbar. Der Besucher muss entweder eine solche Korrelation gedanklich selbst herstellen oder sie wird in der abgespielten Information gegeben.

Des Weiteren kann es vorkommen, dass während des Abspielens einer solchen Tonsequenz der Benutzer abgelenkt wird und somit nicht mehr eine genaue Zuordnung der Tonsequenz zu dem Exponat für den Besucher ersichtlich ist. Er muss dann entweder den entsprechenden Code neu eingeben oder mittels des Sensors die Tonsequenz neu starten. Insgesamt ermöglichen solche Systeme keine intuitive Verbindung zwischen Exponat und abgespielter Information.

Die Druckschrift EP 2 214 425 A1 beschreibt einen binauralen Audioguide, der auf Basis einer optischen Erfassung der Umgebung arbeitet. Die Veröffentlichung von MIAO ZHANG ET AL: "Robust height tracking by proper accounting of nonlinearities in an integrated UWB/MEMS-based-IMU/baro system", PROCEEDINGS OF THE 2012 IEEE/ION POSITION, LOCATION AND NAVIGATION SYMPOSIUM, 1. April 2012, Seiten 414-421, XP055216629, lehrt, dass Ultrabreitbandsensoren als Zusatz zu anderen Sensortypen wie Beschleunigungssensoren die Genauigkeit der Bestimmung von Positions- und Orientierungsdaten verbessert. Die Druckschrift WO 03/049315 A1 offenbart ein Synchronisationssignal zur Synchronisation von einer Audiodatenausgabe auf mobilen Museumsführern zu Videodaten, welche auf einer externen Leinwand wiedergegeben werden.

Es ist eine Aufgabe der Erfindung, eine mobile Vorrichtung, ein System für eine solche mobile Vorrichtung sowie ein Verfahren anzugeben, welche die genannten Nachteile vermeiden und beispielsweise eine intuitivere Verbindung zwischen Tonsequenz und Exponat ermöglichen. Diese Aufgabe wird durch die Merkmale der unabhängigen Ansprüche gelöst. Weitere Ausgestaltungen der Erfindung sind in den abhängigen Ansprüchen angegeben.

Das Ortungsmodul der erfindungsgemäßen mobilen Vorrichtung umfasst die Mermale des Anspruchs 1.

Bei einer bevorzugten Ausführungsform des Ortungsmoduls können folgende Sensoren vorgesehen sein: Sensoren zur Erfassung der Geschwindigkeit und/oder der Beschleunigung des Ortungsmoduls, insbesondere ein Inertialsensor-System mit einem 3D-Gyroskop und/oder ein 3D-Beschleunigungssensor, ein Sensor zur Erfassung von magnetischen Veränderungen, insbesondere ein 3D-Magnetometer und/oder ein Barometer. Insbesondere die Kombination oder/und Zusammenführung der Sensorsignale mit der Positionierung des Ortungsmoduls mittels der Positionssignale ermöglicht eine besonders genaue und effiziente Ermittlung der Position und der Orientierung des Ortungsmoduls.

Bevorzugt ist das Ortungsmodul dazu eingerichtet, die Positionsdaten auf Basis der Sensorsignale zu erzeugen und die so erzeugten Positionsdaten mit den Positionssignalen abzugleichen. Erfindungsgemäß ist der Empfänger zum Empfang von auf Ultrabreitband-Technologie basierenden Positionssignalen ausgelegt. Die Positionssignale werden in Abhängigkeit von der Zeit, den Positionsdaten, den Orientierungsdaten oder/und einer Kanal- oder/und Netzbelegung empfangen. Dies wird nachfolgend detailliert unter Bezugnahme auf die noch zu beschreibende mobile Vorrichtung erläutert.

Die erfindungsgemäße mobile Vorrichtung weist einen Kopfhörer mit je einem Lautsprecher für jedes Ohr oder einen entsprechenden Ohrhörer auf. Des Weiteren weist die mobile Vorrichtung ein Ortungsmodul zur Erzeugung von Positionsdaten und von Orientierungsdaten in Abhängigkeit von der Position und der Orientierung des Kopfhörers in einem realen Raum auf.

Der Begriff Kopfhörer soll sowohl Kopfhörer mit auf den Ohren aufliegenden Lautsprechern als auch sogenannte Ohrhörer umfassen, bei denen die Lautsprecher ganz oder teilweise in das Ohr oder den Gehörgang eingebracht werden. Unter Positionsdaten werden Daten verstanden, die eine genaue Position eines Objekts in einem Raum angeben, beispielsweise durch drei Raumkoordinaten wie etwa x, y, z beschrieben. Unter Orientierungsdaten soll die räumliche Orientierung oder Ausrichtung des Objekts in dem Raum verstanden werden. Zur vollständigen Definition einer Orientierung eines Objekts in einem Raum werden üblicherweise drei Winkelgrößen angegeben. Im vorliegenden Fall kann es ausreichend sein, nur einen Winkel wie beispielsweise die Ausrichtung des Kopfhörers hinsichtlich einer vertikalen Achse anzugeben. Alternativ können zwei Winkel wie etwa die eben erwähnte Drehung um eine vertikale Achse sowie die Ausrichtung des Kopfhörers um eine Achse, die waagrecht durch beide Lautsprecher verläuft, auch Nickachse genannt.

Des Weiteren weist die mobile Vorrichtung einen Speicher auf. Der Speicher dient zur Speicherung von akustischen Quellsignalen und den akustischen Quellsignalen zugeordnete Objektpositionsdaten und/oder Objektorientierungsdaten in einem virtuellen Raum. Unter akustischen Quellsignalen werden alle Arten von Signalen verstanden, die über die Lautsprecher eines Kopfhörers ausgegeben werden können, also beispielsweise gesprochene Sprache, Musik, Geräusche, Töne, etc.

Die Objektpositionsdaten und/oder Objektorientierungsdaten legen fest, wo das akustische Quellsignal verortet sein soll und in welche Richtung es hörbar sein soll. Dabei können die Objektpositionsdaten und/oder Objektorientierungsdaten auch eine zeitliche Veränderbarkeit aufweisen. Es können also beispielsweise Zeiträume festgelegt sein, in denen bestimmte akustische Quellsignale an den angegebenen Objektpositionsdaten und/oder Objektorientierungsdaten auftreten sollen. Es kann auch in den Objektpositionsdaten und/oder Objektorientierungsdaten festgelegt sein, dass während der Wiedergabe eines akustischen Signals dieses eine räumliche und/oder Richtungsveränderung erfährt. Diese Objektpositionsdaten und/oder Objektorientierungsdaten sind beispielsweise einem Objekt in dem realen Raum zuordenbar. Das Objekt kann beispielsweise ein Exponat in einem Museumsraum sein.

Es besteht also eine Verknüpfung zwischen dem virtuellen Raum, in dem die akustischen Quellsignale verortet sind, und dem realen Raum, in dem sich Objekte befinden. Die Objekte können reale greifbare Exponate, projizierte Filmvorführungen oder Lichteffekte in dem realen Raum sein. Es findet also eine Verknüpfung realer visueller Eindrücke durch Objekte mit akustischen Signalen statt. Auch eine Veränderung der Objekte in dem Raum kann durch eine entsprechende Positions- oder/und Orientierungsveränderung der akustischen Signale begleitet sein.

Die mobile Vorrichtung weist einen Prozessor auf, der dazu ausgelegt ist, die Positionsdaten und die Orientierungsdaten von dem Ortungsmodul zu empfangen, die akustischen Quellsignale und die den akustischen Quellsignalen zugeordneten Objektpositionsdaten und/oder Objektorientierungsdaten aus dem Speicher zu lesen, in Abhängigkeit von den empfangenen und gelesenen Daten die akustischen Quellsignale zu verarbeiten und entsprechende akustische Objektsignale an den Kopfhörer derart auszugeben, dass die akustischen Quellsignale einem den Kopfhörer tragenden Hörer entsprechen den zugehörigen Positionsdaten und/oder Objektorientierungsdaten akustisch verortet erscheinen. Die entsprechende Richtungsverortung der akustischen Quellsignale kann aktiv durch den Prozessor erfolgen. Der Prozessor liest also das Quellsignal und erzeugt das zugehörige verortete akustische Objektsignal vor der Ausgabe an den Kopfhörer.

Es werden also die akustischen Quellsignale wie beispielsweise ein zu einem Exponat gehöriger vorgelesener Informationstext als Tonsequenz gespeichert. Nähert sich beispielsweise der Kopfhörer dem Exponat, kann beispielsweise mit Unterschreiten eines bestimmten Entfernungsradius die Tonsequenz an dem Kopfhörer so wiedergegeben werden, dass sie direkt von dem Exponat zu kommen scheint. Auch bei einer Drehung des Kopfhörers oder einem Wegbewegen oder Zubewegen auf das Exponat hin scheint die Tonsequenz stets direkt von dem Exponat zu kommen. Somit muss der eine solche mobile Vorrichtung benutzende Besucher eines Museums nicht auf die Aktivierung der entsprechenden Tonsequenzen achten und kann die Tonsequenzen stets zweifelsfrei einem bestimmten Objekt zuordnen, da hörbar ist, von wo die entsprechende Tonsequenz zu kommen scheint.

Zusätzlich oder alternativ kann vorgesehen sein, dass in Abhängigkeit von der Entfernung der mobilen Vorrichtung von einer Position im Raum, beispielsweise bei Unterschreiten einer Entfernung zu einem Exponat, akustische Objektsignale an den Kopfhörer ausgegeben werden, die eine Raumakustik wiedergeben. Wird die Entfernung wieder überschritten, kann die Ausgabe der positionsspezifischen Objektsignale wieder beendet werden. Der Benutzer kann also direkt vor den Exponaten in die jeweilige Klangwelt eintauchen, ohne sich um die Aktivierung der jeweiligen Tonsequenz kümmern zu müssen.

Das Ortungsmodul weist mindestens einen Sensor zur Erfassung von Orientierungsdaten und einen Empfänger zum Empfangen von Positionssignalen auf. Zusätzlich kann das Ortungsmodul auch einen Sensor zur Erfassung von Positionsdaten aufweisen. Bei dem Sensor kann es sich um einen Inertialsensor zur Messung von Drehraten oder um eine Kombination unterschiedlicher Sensoren wie beispielsweise Inertialsensoren handeln. Beispielsweise kann es sich um einen, zwei oder drei orthogonal zueinander angeordnete Drehratensensoren, auch gyroskopische Sensoren oder Gyrosensoren genannt, handeln, welche die Winkelgeschwindigkeit um drei zueinander orthogonal angeordnete Achsen messen. Alternativ oder zusätzlich kann der Sensor beispielsweise Sensoren umfassen, ein einer translatorischen Beschleunigung oder ein einer Translation der mobilen Vorrichtung entsprechendes Sensorsignal erzeugen. Bei den Positionssignalen handelt es sich erfindungsgemäß um auf Ultrabreitband-Technologie basierende Signale.

Vorteilhafterweise kann bei der mobilen Vorrichtung oder dem Ortungsmodul vorgesehen sein, dass die Positionsdaten auf Basis der Sensorsignale erzeugt und die so erzeugten Positionsdaten mit den Positionssignalen abgeglichen werden. Die Positionssignale werden also zunächst auf Basis von in der mobilen Vorrichtung oder dem Ortungsmodul vorhandenen Sensorsignalen erzeugt, insbesondere fortlaufend erzeugt, und beispielsweise an den Prozessor der mobilen Vorrichtung oder über die Schnittstelle des Ortungsmoduls ausgegeben. Die erzeugten Positionsdaten können mit Positionssignalen, die beispielsweise über den Empfänger empfangen werden, abgeglichen und gegebenenfalls korrigiert werden. Das Empfangen, Abgleichen und Korrigieren kann in Abhängigkeit von bestimmten Parametern stattfinden. Bei den Parametern kann es sich beispielsweise um eine zeitliche Taktung, ein bestimmtes Bewegungsmuster der mobilen Vorrichtung, eine Qualität der Positionssignale, eine Verfügbarkeit der Positionssignale, etc. handeln. Es kann also beispielsweise das Empfangen der Positionssignale und/oder das Abgleichen und gegebenenfalls Korrigieren der Positionsdaten anhand der Positionssignale in regelmäßigen Zeitabständen, also beispielsweise gemäß einer Taktfrequenz, wie etwa jede Sekunde, alle 2 Sekunden oder alle 500 ms erfolgen. Somit kann also sozusagen eine "Off-line"-Positionsermittlung der mobilen Vorrichtung oder des Ortungsmoduls in der mobilen Vorrichtung oder dem Ortungsmodul selbst erfolgen. Die Genauigkeit der so ermittelten Position der mobilen Vorrichtung oder dem Ortungsmodul wird dann signifikant durch eine Hinzunahme des Positionssignals erhöht. Je nach Anforderung an die Positionierungsgenauigkeit der mobilen Vorrichtung oder dem Ortungsmodul im Raum kann der Abgleich durch das Positionssignal sehr häufig oder weniger häufig stattfinden. Die Häufigkeit des Abgleichs kann fest eingestellt oder dynamisch gestaltet sein. Es kann auch vorgesehen sein, dass eine Bewertung der Positionssignale in Abhängigkeit von den Positionsdaten stattfindet. Es können beispielsweise im realen Raum Positionen bekannt sein, an denen das Positionssignal verzerrt oder anderweitig gestört oder gar oder nicht empfangbar ist. Es kann an solchen Positionen eine Korrektur des Positionssignals anhand der Positionsdaten auf beispielsweise eine vorher in der mobilen Vorrichtung oder dem Ortungsmodul abgespeicherte Weise oder beispielsweise anhand von Plausibilitätsüberlegungen erfolgen. Alternativ kann an solchen Positionen das Positionssignal komplett ignoriert oder nur das Positionssignal einzelner Sender ignoriert werden. Es kann so ein vorteilhafter Kompromiss zwischen der notwendigen Genauigkeit der Positionsdaten der mobilen Vorrichtung oder des Ortungsmoduls und anderen Faktoren wie beispielsweise einem Energieverbrauch oder einer verfügbaren Datenrate des Positionssignals erreicht werden.

Erfindungsgemäß ist für das Ortungsmodul der mobilen Vorrichtung vorgesehen, dass der Empfänger zum Empfang von auf Ultrabreitband-Technologie (UWB-Technologie) basierenden Positionssignalen ausgelegt ist. Insbesondere kann die mobile Vorrichtung oder das Ortungsmodul neben dem Empfänger auch einen entsprechenden Sender oder alternativ einen Transceiver aufweisen, der neben einem Empfang eines UWB-Signals auch ein Aussenden eines UWB-Signals ermöglicht. Bei der Ultrabreitband-Technologie kann es sich beispielsweise um eine Technologie nach dem Standard IEEE 802.15.4 UWB PHY handeln. Beispielsweise können hierbei folgende Kanäle spezifiziert sein:

| Kanalnummer | Mittelfrequenz (MHz) | Bandbreite (MHz) |
|---|---|---|
| 1 | 3494,4 | 499,2 |
| 2 | 3993,6 | 499,2 |
| 3 | 4492,8 | 499,2 |
| 4 | 3993,6 | 1331,2 * |
| 5 | 6489,6 | 499,2 |
| 7 | 6489,6 | 1081,6 |

Der Einsatz der UWB-Technologie erlaubt die gleichzeitige Verwendung anderer Funksysteme wie beispielsweise von WLAN-Systemen. Ferner kann mit der UWB-Technologie eine bidirektionale Kommunikation etabliert werden.

Die UWB-Technologie erlaubt es außerdem, dass die Positionssignale in Abhängigkeit von bestimmten Parametern empfangen/gesendet werden. Beispielsweise kann der Empfang oder/und das Aussenden eines Positionssignals nur zu bestimmten Zeitpunkten, beispielsweise alle 10 Sekunden, jede Sekunde, alle 500 ms oder alle 100 ms konfiguriert sein.

Gleichzeitig oder alternativ kann in Abhängigkeit von den Positionsdaten oder/und Orientierungsdaten des Ortungsmoduls ein Empfang oder/und ein Aussenden eines Positionssignals stattfinden. Kann aus den Positionsdaten oder/und den Orientierungsdaten beispielsweise geschlossen werden, dass sich die mobile Vorrichtung oder das Ortungsmodul nicht bewegt, ist der Empfang oder/und die Aussendung eines weiteren Positionssignals nicht notwendig. Zeigen hingegen die Positionsdaten oder/und die Orientierungsdaten an, dass sich die mobile Vorrichtung oder das Ortungsmodul schnell bewegt, kann es sinnvoll sein, einen häufigeren Empfang oder/und ein häufigeres Aussenden der Positionssignale zu realisieren. Es kann also die Empfangs- oder/und Aussendehäufigkeit von dem Ort, der Geschwindigkeit oder/und der Beschleunigung der mobilen Vorrichtung oder des Ortungsmoduls abhängig sein. Die Häufigkeit des Empfangs und/oder der Aussendung der Positionssignale kann beispielsweise durch einen oder mehrere in einem Empfangs- oder/und Sendebereich angeordneten Sender/Empfänger gesteuert werden. Alternativ oder zusätzlich kann die Empfangs- und/oder Sendehäufigkeit auch durch die mobile Vorrichtung oder das Ortungsmodul selbst gesteuert werden. Hierzu ist beispielsweise eine bidirektionale Kommunikation zwischen der mobilen Vorrichtung oder dem Ortungsmodul und dem/den Sender(n)/Empfänger(n) möglich. Gleichzeitig oder alternativ kann die Häufigkeit des Empfangs oder/und des Aussendens des Positionssignals von einer Kanal- oder/und Netzbelegung abhängig sein. Ist beispielsweise eine größere Anzahl an mobiler Vorrichtungen oder Ortungsmodule innerhalb eines Empfangs-/Sendebereichs, kann es notwendig sein, die Häufigkeit des Empfangs oder/und des Aussendens des Positionssignals herabzusetzen, um eine Überbelegung eines Sende-/Empfangskanals oder eines Netzes zu vermeiden. Des Weiteren kann es von Vorteil sein, wenn der Empfang oder/und das Aussenden eines Positionssignals von einem der mobilen Vorrichtung oder dem Ortungsmodul zur Verfügung stehenden Energievorrat abhängig ist. Geht beispielsweise der Energievorrat der mobilen Vorrichtung oder dem Ortungsmodul zur Neige, kann es sinnvoll sein, den Empfang oder das Aussenden des Positionssignals weniger häufig stattfinden zu lassen.

Die genannten Möglichkeiten zur Einstellung der Empfangs- oder/und der Sendehäufigkeit des Positionssignals erlauben es in überraschender Weise, einen für den Betrieb der mobilen Vorrichtung oder dem Ortungsmodul notwendigen Parametersatz zu finden, der eine hinreichend genaue Ortung der mobilen Vorrichtung oder des Ortungsmoduls im Raum, eine an den Energievorrat der mobilen Vorrichtung oder des Ortungsmoduls angepasste Empfangs- und gegebenenfalls Sendeleistung und eine an die in einem Empfangs- bzw. Sendebereich vorhandene Anzahl an mobilen Vorrichtungen oder Ortungsmodule angepasste Kanal- bzw. Netzwerkbelegung zu finden.

Bei der Ermittlung der Position der mobilen Vorrichtung oder des Ortungsmoduls aus den Positionssignalen kann beispielsweise ein Laufzeitverfahren ("time-of-flight", "TOF") zum Einsatz kommen. Dabei wird die Laufzeit eines Signals von einem Sender/Empfänger zu der mobilen Vorrichtung oder dem Ortungsmodul zur Ermittlung der Position herangezogen. Es kann beispielsweise eine Nachricht von der mobilen Vorrichtung oder dem Ortungsmodul zu einem Sender/Empfänger, von dem ersten Sender/Empfänger zu einem zweiten Sender/Empfänger und von dem zweiten Sender/Empfänger zu der mobilen Vorrichtung oder dem Ortungsmodul gesendet werden und daraus die Laufzeit des Signals zwischen der mobilen Vorrichtung oder dem Ortungsmodul und Sender/Empfänger berechnet werden.

Alternativ kann ein Verfahren zum Einsatz kommen, das die Ankunftszeitdifferenzen eines von der mobilen Vorrichtung ausgesendeten Signals an verschiedenen Empfangsstellen berücksichtigt ("time difference of arrival", "TDOA"). Sendet die mobile Vorrichtung oder das Ortungsmodul periodisch ein Signal aus, kann aus den Ankunftszeiten an verschiedenen Empfangsstellen, die eine miteinander synchronisierte Zeitbasis besitzen, auf die Position der mobilen Vorrichtung oder des Ortungsmoduls geschlossen werden.

Alternativ kann die Position des Kopfhörers durch ein in dem Raum vorhandenes System ermittelt und über das System als Positionssignal an die mobile Vorrichtung übertragen werden.

Eine ebenfalls vorteilhafte Weiterbildung der Erfindung sieht vor, dass die mobile Vorrichtung dazu eingerichtet ist, die Objektpositionsdaten und/oder Objektorientierungsdaten von einer weiteren mobilen Vorrichtung zu empfangen und/oder an eine weitere mobile Vorrichtung zu senden. Beispielsweise kann eine benachbarte mobile Vorrichtung als ein Objekt in dem realen Raum behandelt werden und selbst entsprechenden akustischen Quellsignalen zugeordnet sein. Beispielsweise kann sich in dem virtuellen Raum lediglich optisch simuliert Wasser am Boden befinden. Bewegen sich nun zwei Besucher mit je einer mobilen Vorrichtung durch diesen Raum, kann die Bewegung der Besucher durch das simulierte Wasser mit Wasserplätschern akustisch verknüpft sein. Somit bewegt sich für eine erste mobile Vorrichtung die benachbarte zweite mobile Vorrichtung als Objekt in dem realen Raum. Der zweiten mobilen Vorrichtung sind entsprechende Objektpositions- und Objektorientierungsdaten sowie akustische Quellsignale zugeordnet. Es ist auf der ersten mobilen Vorrichtung das Wasserplätschern bei einer Bewegung der benachbarten zweiten mobilen Vorrichtung hörbar. Selbstverständlich kann jede Art von akustischem Signal der zweiten mobilen Vorrichtung zugeordnet sein.

Eine besonders bevorzugte Ausführungsform der vorliegenden Erfindung sieht vor, dass mindestens ein Mikrofon zur Aufnahme akustischer Umgebungssignale vorgesehen ist. Vorzugsweise ist in der Nähe eines Lautsprechers je ein Mikrofon an dem Kopfhörer angeordnet. Besonders bevorzugt dient das eine oder die zwei Mikrofone zur räumlich aufgelösten Aufnahme akustischer Umgebungssignale. Es ist also vorgesehen, die Umgebungsgeräusche der mobilen Vorrichtung, insbesondere des Kopfhörers, als akustische Umgebungssignale aufzunehmen und als solche - gleichzeitig oder alleine - an den Kopfhörer auszugeben. Dies unterstützt die räumliche und akustische Orientierung eines Hörers in dem Fall, das neben den virtuellen Geräuschen auch reale Geräusche, wie etwa Gespräche benachbarter Besucher etc., vorhanden sind.

Eine bevorzugte Ausführungsform sieht vor, dass der Prozessor ferner dazu ausgelegt ist, während der Ausgabe erster akustischer Objektsignale zweite akustische Objektsignale oder/und die akustischen Umgebungssignale auszugeben. Es ist also möglich, neben konkreten objektbezogenen akustischen Signalen weniger stark räumlich bezogene Hintergrundsignale auszugeben. Dies kann beispielsweise dazu verwendet werden, einem Raum ein spezifisches akustisches Hintergrundszenario zugrunde zu legen, wie beispielsweise "Urwald", "Pyramidenbau", "Boxengasse" etc. Gleichzeitig können überlagert diesem Hintergrundsignal objektspezifische akustische Signale ausgegeben werden. Alternativ oder zusätzlich können die aufgenommen Umgebungssignale ebenfalls mit entsprechendem Pegel überlagert werden.

Die Erfindung sieht vor, dass der Prozessor dazu eingerichtet ist, ein Signal zu empfangen und die akustischen Objektsignale entsprechend dem Signal auszugeben. Bei dem Signal handelt es sich erfindungsgemäß um ein Synchronisationssignal mit gezeigten bewegten Bildern. So kann beispielsweise auf einer Leinwand oder einem Bildschirm ein Film oder eine Filmsequenz in Dauerschleife laufen. Begibt sich der Besucher mit der mobilen Vorrichtung in Sichtweite der Projektion oder des Bildschirms und empfängt ein Synchronisationssignal, gibt die mobile Vorrichtung das zu der Filmsequenz oder Film gehörige akustische Objektsignal in Synchronisation mit den gezeigten bewegten Bildern aus.

Das Synchronisationssignal ermöglicht somit eine zeitliche Zuordnung der akustischen Objektsignale und dadurch eine Synchronisation der Ausgabe der akustischen Objektsignale mit der Ausgabe bewegter Bilddokumente.

Eine weitere vorteilhafte Ausführungsform sieht vor, dass die den akustischen Quellsignalen zugeordneten Objektpositionsdaten oder/und Objektorientierungsdaten personenbezogen sind. Es kann also beispielsweise an der mobilen Vorrichtung eingebbar sein, dass die Person eine bestimmte Sprache spricht, ein bestimmtes Alter hat oder eine bestimmte Größe oder bestimmte Mobilitätseinschränkungen aufweist. Dies kann bei der Auswahl der akustischen Quellsignale berücksichtigt werden. Das erfindungsgemäße System zur Verortung akustischer Signale in einem Raum weist eine erfindungsgemäße mobile Vorrichtung sowie die Merkmale des Anspruchs 10 auf.

Alternativ oder zusätzlich kann vorgesehen sein, dass die mobile Vorrichtung die Positionsdaten an einen Empfänger in dem realen Raum sendet. Die so am Empfänger vorhandenen Positionsdaten einer Mehrzahl mobiler Vorrichtungen können über ein beispielsweise serverbasiertes System an die Mehrzahl mobiler Vorrichtungen gesendet werden, so dass jede mobile Vorrichtung der Mehrzahl mobiler Vorrichtungen über die Positionsdaten aller mobiler Vorrichtungen der Mehrzahl mobiler Vorrichtungen verfügt. Die so verfügbaren Positionsdaten der mobilen Vorrichtungen der Mehrzahl der mobilen Vorrichtungen können in der jeweiligen mobilen Vorrichtung mit entsprechenden akustischen Objektsignalen korreliert werden. Dies ermöglicht ein interaktives Raumklangerlebnis, das durch die Bewegungen der verschiedenen mobilen Vorrichtungen gestaltet wird.

Des Weiteren wird die oben genannte Aufgabe durch ein Verfahren zur Verortung akustischer Signale in einem realen Raum gelöst. Das Verfahren weist die Schritte des Anspruchs 11 auf.

Die Erfindung wird nun unter Bezugnahme auf die Zeichnungen näher erläutert. Es zeigen:
Figur 1 eine schematische Darstellung einer Ausführungsform einer mobilen Vorrichtung;
Figur 2 eine schematische Darstellung eines nicht beanspruchten Systems;
Figur 3 eine schematische Darstellung einer Ausführungsform eines erfindungsgemäßen Systems;
Figur 4 eine schematische erläuternde Darstellung der Systeme der Figuren 2 und 3; und
Figur 5 eine Ausführungsform eines Verfahrens.

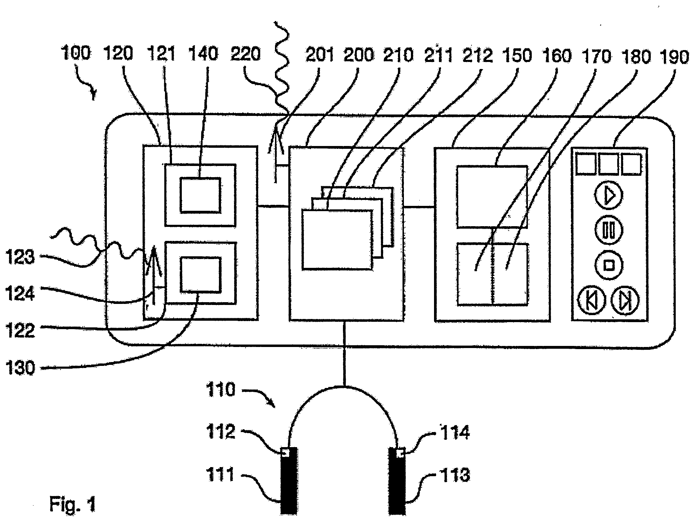

Figur 1 zeigt eine mobile Vorrichtung 100 mit einem Kopfhörer 110, einem Ortungsmodul 120, einem Prozessor 200 sowie einem Speicher 150. Der Kopfhörer 110 weist zwei Lautsprecher 111, 113 auf. Diese sind getrennt ansteuerbar, sodass eine Wiedergabe akustischer Signale mit Richtungslokalisation möglich ist. An jedem Lautsprecher 111, 113 weist der Kopfhörer 110 ein Mikrofon 112, 114 auf. Das Vorsehen zweier Mikrofone 112, 114 stellt eine einfache Möglichkeit dar, richtungsabhängige Tonaufnahmen von der Umgebung herzustellen. Alternativ könnte auch ein einziges Mikrofon mit entsprechender Stereoaufnahmemöglichkeit vorgesehen sein.

Das Ortungsmodul 120 weist einen Sensor 121 zur Erfassung von Orientierungsdaten auf. Der Sensor 121 kann eine Mehrzahl von Inertialsensoren umfassen. Insbesondere kann der Sensor 121 zumindest einen Gyrosensor umfassen, der eine Drehbewegung des Kopfhörers 110 um eine vertikale Achse erfasst. Vorzugsweise erfasst der Sensor 121 zusätzlich ein Nicken des Kopfhörers 110 um einen Achse, die durch beide Lautsprecher 111, 113 verläuft.

Das Ortungsmodul 120 weist einen Empfänger 122 zum Empfangen von Positionssignalen 123 auf. Für das Empfangen der Positionssignale 123 ist eine Antenne 124 vorgesehen. Bei den Positionssignalen 123 handelt es sich um UWB-Signale. Mittels verschiedener im Raum platzierter Sender kann so eine genaue Position der mobilen Vorrichtung 100 beispielsweise über ein Laufzeitverfahren ermittelt werden. Alternativ kann es sich bei den Positionssignalen 123 auch um Datensignale handeln. Die Daten für die Positionssignale 123 können über eine außerhalb der mobilen Vorrichtung 100 vorgenommene Verortung erzeugt und als Positionssignale 123 an die mobile Vorrichtung 100 gesendet werden.

Die von dem Sensor 121 erfassten Orientierungsdaten 140 und die von dem Empfänger 122 erzeugten Positionsdaten 130 werden dem Prozessor 200 zur Verfügung gestellt.

Der Speicher 150 dient zur Speicherung von akustischen Quellsignalen 160. Bei diesen akustischen Quellsignalen 160 kann es sich um Audiodateien handeln, die Sprache, Klang, Ton, Geräusch oder sonstige akustische Informationen enthalten. Die akustischen Quellsignale 160 können mit oder ohne Raumlokalisationsinformationen abgelegt sein.

Den akustischen Quellsignalen 160 sind Objektpositionsdaten 170 oder/und Objektorientierungsdaten 180 zugeordnet und in dem Speicher 150 abgelegt. Die Objektpositionsdaten 170 legen fest, in welcher Position in einem virtuellen Raum das akustische Quellsignal zu verorten ist. Die Objektorientierungsdaten 180 geben Richtungsinformationen über die akustischen Quellsignale 160 wieder und legen fest, in welchem Winkelbereich das akustische Quellsignal 160 hörbar sein soll. Die Positions- und Orientierungsdaten beziehen sich auf einen virtuellen Raum, der dem realen Raum entspricht, in dem sich die mobile Vorrichtung 100 bewegt. Hierbei ist es möglich, beispielsweise Objektpositionsdaten 170 zu wählen, die sich außerhalb des reellen Raums befinden. Es kann so mittels des Kopfhörers 110 bei einem Hörer der hörbare Eindruck eines Geräuschs oder Tons von außerhalb des realen Raumes erweckt werden. Die akustischen Quellsignale 160 sowie die zugehörigen Objektorientierungs- und Objektpositionsdaten 170, 180 stehen dem Prozessor 200 zur Verfügung.

Der Prozessor 200 empfängt die Positions- und Orientierungsdaten 130, 140 von dem Ortungsmodul 120 oder kann diese von dem Ortungsmodul 120 anfordern. Der Prozessor 200 hat Lesezugriff auf den Speicher 150 und kann die akustischen Quellsignale 160 sowie die zugehörigen Objektpositions- und Objektorientierungsdaten 170, 180 lesen. Entsprechend der über das Ortungsmodul 120 ermittelten Position und Orientierung des Kopfhörers 110 ordnet der Prozessor 200 gemäß bestimmten Regeln akustische Quellsignale 160 zu. Der Prozessor 200 verarbeitet die akustischen Quellsignale 160 gemäß den Positions- und Orientierungsdaten 130, 140 sowie den zugehörigen Objektpositions- und Objektorientierungsdaten 170, 180 und gibt akustische Objektsignale 210 an den Kopfhörer 110 aus. Der Prozessor 200 kann diesen
akustischen Objektsignalen 210 zweite akustische Objektsignale 211 überlagern. Beispielsweise kann ein einem bestimmten Exponat zugeordnetes erstes akustisches Objektsignal ein zweites akustisches Objektsignal 211 überlagert werden, das beispielsweise Hintergrundgeräusche trägt. Gleichzeitig kann der Prozessor 200 über die Mikrofone 112, 114 des Kopfhörers 110 aufgenommene Umgebungsgeräusche als akustische Umgebungssignale 212 zumischen und so dem Hörer des Kopfhörers 11O akustische Informationen über reale Geräusche in seiner Umgebung vermitteln. Das Abmischen der jeweiligen Pegel der akustischen Objektsignale 210, 211 sowie der akustischen Umgebungssignale 212 kann nach einem von dem Prozessor gesteuerten Schema erfolgen. Alternativ kann die mobile Vorrichtung 100 Bedienelemente 190 aufweisen, die beispielsweise ein Einstellen der einem bestimmten Exponat zugeordneten ersten akustischen Objektsignale 210 oder der akustischen Umgebungssignale 212 nach den Wünschen des Benutzers ermöglichen. Zusätzlich kann mittels der Bedienelemente ein Wiederholen, Pausieren oder Beenden der Wiedergabe der akustischen Objektsignale 210 beeinflusst werden.

Des Weiteren kann die mobile die mobile Vorrichtung eine Stromquelle, wie beispielsweise einen Akku, zur Versorgung der einzelnen Bauteile mit Energie sowie ein Betriebssystem aufweisen, wie beispielsweise Android.

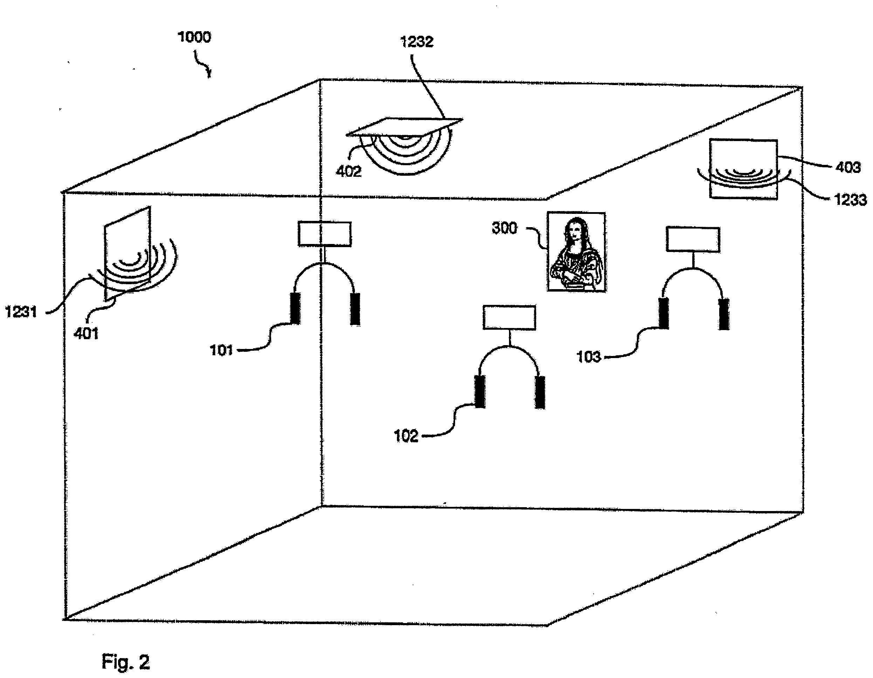

Figur 2 zeigt ein System 1000 zur Verortung akustischer Signale in einem realen Raum. Das System 1000 weist eine erste, eine zweite und eine dritte mobile Vorrichtung 101, 102, 103 wie vorausgehend beschreiben auf. Des Weiteren weist das System Sender 401, 402, 403 auf, die in dem Raum verteilt angeordnet sind. Die Sender 401, 402, 403 senden Positionssignale 1231, 1232, 1233 aus. Anhand dieser
Positionssignale 1231, 1232, 1233 können die mobilen Vorrichtungen 101, 102, 103 ihre Position in dem realen Raum bestimmen. Bei den Positionssignalen handelt es sich in diesem Beispiel um WLAN-Signale, deren Feldstärke und Richtung ausgewertet werden. Alternativ können auch andere Signalarten eingesetzt werden, wobei erfindungsgemäß auf Ultrabreitband-Technologie basierende Positionssignale zum Einsatz kommen. Figur 2 zeigt als erstes Beispiel ein Exponat 300. Hierbei handelt es sich um ein an einer Wand befestigtes Gemälde. Dieses Gemälde ist als Objekt 300 in dem realen Raum vorhanden. In den mobilen Vorrichtungen 101, 102, 103 sind entsprechende akustische Quellsignale 160 sowie eine entsprechende Verortung der akustischen Quellsignale in Form von Objektpositionsdaten 170 und Objektorientierungsdaten 180 hinterlegt. Je nach Position der mobilen Vorrichtungen 101, 102, 103 erscheint das akustische Quellsignal 160 entsprechend dem realen Objekt 300 verortet. Bei dem akustischen Quellsignal 160 kann es sich beispielsweise um einen gesprochenen Informationstext über das Gemälde 300 handeln. Alternativ kann es sich hierbei ein zu dem Gemälde 300 passendes Musikstück oder um aufgenommene Sprache handeln, die von beispielsweise von einer Person gesprochen erscheint, die auf dem Gemälde 300 zu sehen ist. Dabei erscheint der Ton beispielsweise für eine etwas kleinere Person, welche die mobile Vorrichtung 102 trägt, als leicht von oben kommend, während für etwas größere Personen, die beispielsweise die mobilen Vorrichtungen 101, 103 tragen, als von gleicher Höhe kommend.

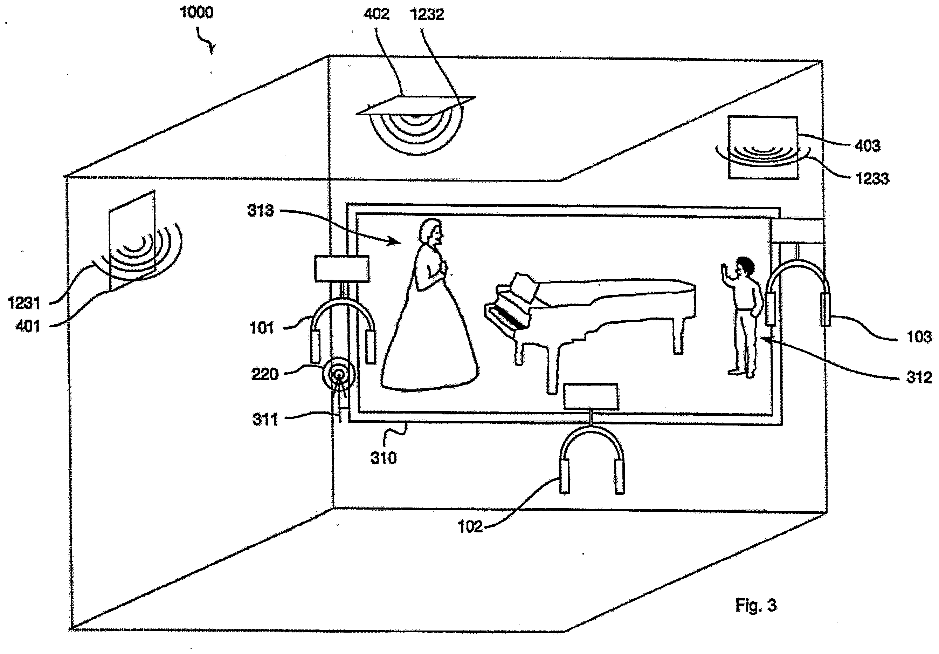

Figur 3 zeigt eine erfindungsgemäße Ausführungsform eines erfindungsgemäßen Systems 1000. Bei dieser Ausführungsform weist das System anstatt eines Objekts 300 eine Leinwand oder ein Bildschirm 310 auf. Der Bildschirm oder die Leinwand 310 weisen eine nennenswerte Ausdehnung auf. Die Leinwand oder der Bildschirm 310 ist mit einer Antenne 311 verbunden, die ein Synchronisationssignal 220 aussendet. Die mobilen Vorrichtungen 101, 102, 103 empfangen das Synchronisationssignal 220 über die Antenne 210. Der Prozessor 200 einer jeden mobilen Vorrichtung 101, 102, 103 kann nun die Wiedergabe eines akustischen Objektsignals 210 mittels des Synchronisationssignals 220 mit den auf der Leinwand oder dem Bildschirm 310 dargestellten bewegten Bildern synchronisieren. Gleichzeitig kann das akustische Objektsignal 210 räumlich mit der auf dem Bildschirm oder der Leinwand 310 dargestellten Szenerie verortet werden. Somit entsteht beispielsweise bei dem Hörer der mobilen Vorrichtung 102 eine andere akustische räumliche Situation als für einen Hörer der mobilen Vorrichtung 103. Während die mobile Vorrichtung 101 beispielsweise von dem dargestellten Kind 312 gesprochene Sprache als weiter entfernt als die von der dargestellten Frau 313 gesprochene Sprache darstellt, ist die Situation bei der mobilen Vorrichtung 103 umgekehrt. Somit entsteht für den Hörer ein stark immersives Hörerlebnis.

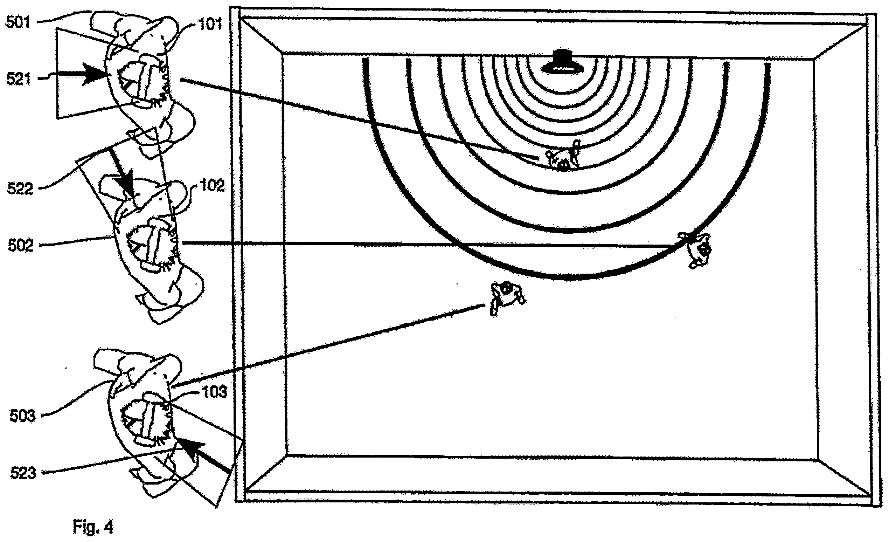

Figur 4 zeigt dieses Prinzip noch einmal deutlich. In einem virtuellen Raum ist eine Schallquelle 510 angeordnet. Eine erste Person 501 trägt eine erste mobile Vorrichtung 101 und steht in einem realen Raum frontal vor einem Objekt, dem die virtuelle Schallquelle 510 zugeordnet ist. Die Person 501 hört nun über die mobile Vorrichtung 101 den Schall der virtuellen Schallquelle 510 als frontal von vorne kommend mit hoher Lautstärke. Die Person 502 mit der mobilen Vorrichtung 102 wendet sich dem Exponat, dem die virtuelle Schallquelle 510 zugeordnet ist, seitlich in größerer Entfernung zu. Entsprechend gibt die mobile Vorrichtung 102 den Ton der virtuellen Schallquelle 510 als von seitlich rechts kommend mit mittlerer Lautstärke aus. Die Person 503 mit der mobilen Vorrichtung 103 wendet sich von dem Objekt, dem die virtuelle Schallquelle 510 zugeordnet ist, ab und befindet sich in noch größerer Entfernung. Entsprechend gibt die mobile Vorrichtung 103 den Schall der virtuellen Schallquelle 510 als von hinten kommend und leise aus.

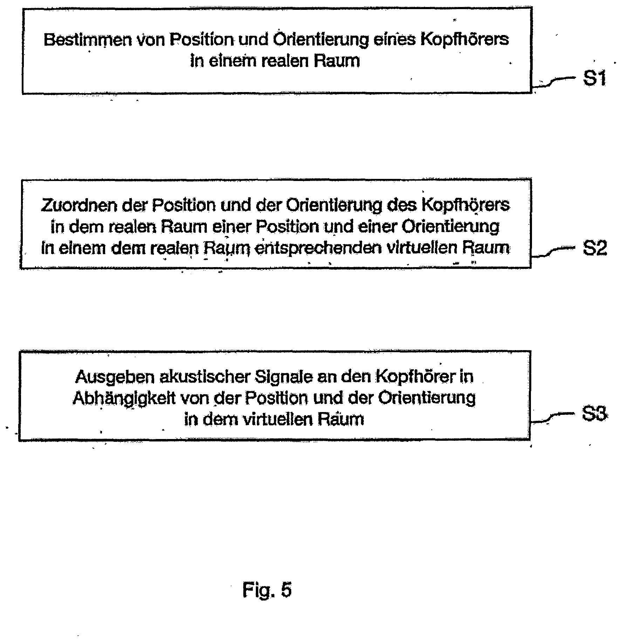

Figur 5 zeigt schematisch die Schritte eines Verfahrens. In einem ersten Schritt S1 werden Position und Orientierung eines Kopfhörers in einem realen Raum bestimmt. In einem Schritt S2 werden der Position und der Orientierung des Kopfhörers in dem realen Raum eine Position und eine Orientierung des Kopfhörers in einem dem realen Raum entsprechenden virtuellen Raum zugeordnet. In einem Schritt S3 werden akustische Signale an den Kopfhörer in Abhängigkeit von der Position und der Orientierung des Kopfhörers in dem virtuellen Raum so ausgegeben, dass die akustischen Signale entsprechend verortet erscheinen.

Die vorliegende Erfindung ermöglicht eine neue Art von auditivem Erleben. Durch die genaue Verortung der individuellen Position jeder einzelnen mobilen Vorrichtung und die Positionierung virtueller Soundquellen in einem dreidimensionalen Raum, welcher mit dem realen Raum, in dem sich die mobilen Vorrichtungen bewegen, zugeordnet ist, ist es möglich, dass sich jeder Benutzer einer mobilen Vorrichtung in seiner eigenen Soundwelt bewegt. Die Soundwelt kann bei Bedarf für die einzelne Person individuell gestaltet werden. Der Benutzer nimmt alle Töne genau so wahr, wie seine aktuelle Position im Raum dies erlaubt. Jeder Ton wird so zu einem erforschbaren, erlebbaren, richtungsweisenden und überraschenden Element. Der Ton wird zu einer Installation, die jeder Benutzer individuell in Kombination mit seinen visuellen Wahrnehmungen im Raum erlebt.

Der Ton von Quellen wie Filmen oder interaktiven Exponaten wird von der mobilen Vorrichtung über den Kopfhörer abgespielt. Hierzu wird eine direkte Verbindung beispielsweise über Bluetooth zu den Quellen hergestellt, um die Gleichschaltung von Bild und Ton zu ermöglichen.

Bei medialen Inszenierungen wie einem Film auf einer Leinwand mit beispielsweise 40 Meter Breite kann jeder im Film entstehende Ton von jedem Betrachter genau an der Stelle auf der Leinwand wahrgenommen werden, an dem er entsteht. Die Intensität des Tons ist abhängig von der Position beziehungsweise dem Abstand des Betrachters zu diesem Punkt. Mediale Installationen bekommen so eine weitere bisher nicht dagewesene Dimension.

Der Besucher bewegt sich durch einen oder mehrere Räume. Seine Bewegung und die Orientierung seines Kopfes werden in Echtzeit getrackt. Diese Daten werden an eine Software in der mobilen Vorrichtung gesendet. In der Software sind die Räume, in der sich der Benutzer bewegt, als dreidimensionales Modell hinterlegt. Es erfolgt also eine genaue Verortung der Person im dreidimensionalen Raum der Software. In diesem dreidimensionalen Raum können nun Soundquellen an gewünschten Punkten platziert werden, die der Benutzer dann wiederum über seine Kopfhörer hören kann. Der Effekt ist, dass er die Position der Soundquellen akustisch im realen Raum erkennt.

Durch die Bewegung im Raum kann sich der Benutzer auf Schallquellen zubewegen oder davon wegbewegen. Die Sounds sind im Kopfhörer als an definierten Punkten im Raum verortet wahrzunehmen. Die mobile Vorrichtung muss Position und Orientierung des Kopfhörers im Raum erfassen können. Das System, das den Ton zuspielt, muss auf einem dreidimensionalen Raum basieren, der individuell für jeden Einsatzort erstellt wird. In diesem Raum werden die Sounds positioniert. Durch die Positions- und Orientierungsinformationen des Kopfhörers kann sich der Benutzer in diesem Klangraum bewegen.

In einem Anwendungsbeispiel kommt der Sound von nicht sichtbaren Ereignissen. Man ist beispielsweise in einer Ausstellung über Ägypten und hört Geräusche, wie auf einer Baustelle der Pyramiden vor tausenden von Jahren. Beim Verlassen dieses Raumes mit dem Thema "in der Pyramide" und dem Eintreten in einen anderen Raum beispielsweise mit dem Thema "Wüste" verändert sich die Akustik und der zugehörige Sound. Der Besucher kann jederzeit umkehren und wieder "in die Pyramide" gehen. Im Unterschied zu einem auf Lautsprecher ohne Kopfhörer basierenden System ergibt sich eine andere Qualität und eine deutlich immersiver zu erlebende Akustik. Übergänge zwischen den Klanginstallationen sind genau definiert einstellbar.

In einer anderen Ausführungsform ist der Sound suggestiv. Dies bedeutet, dass sich beispielsweise mehrere nicht zu öffnende Türen in einem Raum befinden. Nähert man sich einer Türe, hört man Geräusche oder Gespräche von der anderen Seite der Türe. Die Akustik ist so gestaltet, als ob sie durch eine geschlossne Türe käme. Hier besteht der Vorteil darin, dass die Verständlichkeit für den einzelnen Benutzer genau eingestellt werden kann. Insbesondere kann der Bereich festgelegt werden, ab dem der Sound zu hören ist. Es können akustische Überschneidungen leicht vermieden werden. Darüber hinaus ist es möglich, den Ton erst bei einer definierten Annäherung und darüber hinaus für jeden Benutzer individuell zu starten.

In einer weiteren Ausführungsform ist der Sound direkt. Beispielsweise kann ein Motor eines Formel-1-Rennwagens ausgestellt sein. Bei Annäherung oder einem Vorbeilaufen ist der laufende Motor über die mobile Vorrichtung zu hören. Mit der mobilen Vorrichtung kann der Bereich, in dem der Motorsound zu hören ist, genau eingestellt werden. Zudem ist die Veränderung der Lautstärke bei einer Annäherung genau definierbar.

Eine weitere Ausführungsform sieht vor, dass der Sound von einer medialen Installation kommt. Denkbar ist beispielsweise eine Projektion mit 30 Meter Breite an einer Wand. Alternativ oder zusätzlich kann es sich auch um eine 360-Grad-Projektion handeln. Die einzelnen Sounds des projizierten Films sind genau an den Positionen der Leinwand verortbar, an denen sie tatsächlich im realen Raum stattfinden. Beispielsweise kann bei einer 30-Meter-breiten Projektion ganz links ein Hund gezeigt sein, der bellt. Ein Besucher, der mit der mobilen Vorrichtung direkt vor dem Hund steht, hört diesen sehr laut von vorne. Ein anderer Besucher mit einer mobilen Vorrichtung, der in dem Raum rechts weiter hinten steht, hört den Hund von weiter weg links vorne.

Eine weitere Ausführungsform realisiert ein interaktives Exponat im Raum. Der Sound zu dem Exponat wird nicht über Lautsprecher im Raum ausgegeben, sondern über die mobile Vorrichtung. Steht der Besucher mit der mobilen Vorrichtung direkt vor dem Exponat, hört er den Sound direkt vor sich. Steht der Besucher hingegen zehn Meter entfernt von dem Exponat mit dem Rücken dazu, hört er den Sound leise hinter sich. Wird das Exponat von einer Person bedient, ist das Resultat der Interaktion akustisch wahrnehmbar.

Eine weitere Ausführungsform realisiert interaktive Elemente, wie beispielsweise eine Wasserprojektion auf dem Boden. Geht der Besucher mit der mobilen Vorrichtung, werden optisch Wellen simuliert. Damit verknüpft ist eine Wiedergabe eines entsprechenden Geräusches über die mobile Vorrichtung unter dem Besucher verortet. Bewegt sich ein weiterer Besucher mit einer weiteren mobilen Vorrichtung zehn Meter neben dem erstgenannten Besucher und bewegt sich ebenfalls so, dass optisch Wellen erzeugt werden, hört der erste Besucher ein entsprechendes Geräusch leiser entfernt von der Seite.

Eine weitere Ausführungsform sieht eine teilweise Kombination der genannten Möglichkeiten vor. Beispielsweise kann als Objekt im Raum ein Spiegel montiert sein. Bewegt sich ein Besucher auf den Spiegel zu, kann die mobile Vorrichtung den Ton der Fußtritte des Besuchers als diesen entgegenkommend wiedergeben.

Die mobile Vorrichtung kann weitgehend unabhängig von zentralen Servern ausgelegt werden. Eine Datenübertragung von einem Server zu der mobilen Vorrichtung ist prinzipiell nicht notwendig. Die mobile Vorrichtung weist eine Positions- und Orientierungsbestimmung auf, beinhaltet die wiederzugebenden Sounds sowie eine Software, die einen entsprechenden Prozessor bedient. Die mobile Vorrichtung empfängt nur einzelne bestimmte Signale von außen. Beispielsweise einen Timecode als Synchronisierungssignals eines Filmes oder eventuell Positionsdaten anderer Benutzer.

Eine Aktualisierung bei eventuellen Änderungen in den Räumen kann beispielsweise an einer Ladestation oder durch einfachen Austausch einer Speicherkarte geschehen. Die mobile Vorrichtung weist somit eine Software zur Positions- und Orientierungserkennung auf, eine Software mit dem realen Raum als dreidimensionales Modell, eine Audiosoftware, die einen Sound im Raum positionieren kann. Es ist ein Chip zur Positions- und Orientierungserkennung enthalten, eine Soundkarte sowie ein Speicher zum Speichern aller Soundfiles und zum Erzeugen der akustischen Signale, ein Kopfhörer. Im Raum, in dem sich die mobile Vorrichtung bewegt, sind ein oder mehrere Sender notwendig zur Positionsbestimmung.

## Patentansprüche

1. Mobile Vorrichtung (100), mit
a) einem Kopfhörer (110) mit zwei Lautsprechern (111, 113),
b) einem Ortungsmodul (120) zur Erzeugung von Positionsdaten (130) und von Orientierungsdaten (140) in Abhängigkeit von der Position und der Orientierung des Kopfhörers (110) in einem realen Raum, mit
i) Sensoren zur Erfassung der Orientierung des Ortungsmoduls und zur Ausgabe von Sensorsignalen,
ii) einem Empfänger zum Empfangen von Positionssignalen, wobei der Empfänger zum Empfang von auf Ultrabreitband-Technologie basierenden Positionssignalen ausgelegt ist,
iii) einem Prozessor, der dazu ausgelegt ist, die Sensorsignale und die Positionssignale zur Erzeugung von Positionsdaten und von Orientierungsdaten zu verarbeiten sowie
iv) einer Schnittstelle zur Ausgabe der Positionsdaten und der Orientierungsdaten,
c) einem Speicher (150) zur Speicherung von akustischen Quellsignalen (160) und den akustischen Quellsignalen (160) zugeordneten Objektpositionsdaten (170) und/oder Objektorientierungsdaten (180) in einem virtuellen Raum,
d) einem Prozessor (200), der dazu ausgelegt ist,
i) die Positionsdaten (130) und die Orientierungsdaten (140) von dem Ortungsmodul (120) zu empfangen,
ii) die akustischen Quellsignale (160) und die den akustischen Quellsignalen (160) zugeordneten Objektpositionsdaten (170) und/oder Objektorientierungsdaten (180) aus dem Speicher (150) zu lesen,
iii) in Abhängigkeit der Positionsdaten (130), der Orientierungsdaten (140), der Objektpositionsdaten (170) und/oder der Objektorientierungsdaten (180) den gespeicherten akustischen Quellsignalen (160) entsprechende akustische Objektsignale (210) an den Kopfhörer (110) derart auszugeben, dass die gespeicherten akustischen Quellsignale (160) einem mit den akustischen Signalen gespeisten Kopfhörer (110) tragenden Hörer entsprechend den zugehörigen Objektpositionsdaten (170) und/oder Objektorientierungsdaten (180) akustisch verortet erscheinen, wobei
e) der Prozessor (200) dazu eingerichtet ist, ein Synchronisationssignal (220) zu empfangen und die akustischen Objektsignale (210, 211) entsprechend dem Synchronisationssignal (220) auszugeben, wobei das Synchronisationssignal (220) eine Synchronisation der Ausgabe der akustischen Objektsignale (210, 211) mit der Ausgabe bewegter Bilddokumente (310) ermöglicht, und wobei
f) der Prozessor (200) dazu ausgelegt ist, für akustische Quellsignale (160), die Bildinhalten einer Szenerie der Bilddokumente zugeordnet sind, bei ersten Positionsdaten (130) oder/und ersten Orientierungsdaten (140) des Orientierungsmoduls (120) andere akustische Objektsignale (210, 211) auszugeben als bei von den ersten unterschiedlichen zweiten Positionsdaten oder/und zweiten Orientierungsdaten, sodass die akustischen Quellsignale (160) für die Bildinhalte innerhalb der Szenerie der Bilddokumente verortet erscheinen.

2. Mobile Vorrichtung nach Anspruch 1, **dadurch gekennzeichnet, dass** die Objektpositionsdaten (170) und/oder Objektorientierungsdaten (180) in dem virtuellen Raum einem Objekt (300) in dem realen Raum zuordenbar sind.

3. Mobile Vorrichtung nach Anspruch 1 oder 2, **dadurch gekennzeichnet, dass** die Sensoren
a) Sensoren zur Erfassung der Geschwindigkeit des Ortungsmoduls,
b) Sensoren zur Erfassung der Beschleunigung des Ortungsmoduls,
c) Sensoren zur Erfassung der Geschwindigkeit und der Beschleunigung des Ortungsmoduls,
d) ein Inertialsensor-System mit einem 3D-Gyroskop,
e) einen 3D-Beschleunigungssensor,
f) einen Sensor zur Erfassung von magnetischen Veränderungen,
g) ein 3D-Magnetometer oder/und
c) ein Barometer umfassen.

4. Mobile Vorrichtung nach einem der vorhergehenden Ansprüche, wobei das Ortungsmodul (120) dazu eingerichtet ist, die Positionsdaten auf Basis der Sensorsignale zu erzeugen und die so erzeugten Positionsdaten mit den Positionssignalen abzugleichen.

5. Mobile Vorrichtung nach einem der vorhergehenden Ansprüche, wobei die Positionssignale in Abhängigkeit von einer Zeit, den Positionsdaten, den Orientierungsdaten oder/und einer Kanal- oder/und Netzbelegung empfangen werden.

6. Mobile Vorrichtung nach einem der vorhergehenden Ansprüche, **dadurch gekennzeichnet, dass** die mobile Vorrichtung (100) dazu eingerichtet ist, die Objektpositionsdaten (170) und/oder die Objektorientierungsdaten (180) von einer weiteren mobilen Vorrichtung (101) zu empfangen und/oder an eine weitere mobile Vorrichtung zu senden.

7. Mobile Vorrichtung nach einem der vorhergehenden Ansprüche, **dadurch gekennzeichnet, dass** mindestens ein Mikrofon (112, 114), vorzugsweise an dem Kopfhörer (110) je ein Mikrofon (112, 114) in der Nähe eines Lautsprechers (111, 113), zur Aufnahme, vorzugsweise zur räumlich aufgelösten Aufnahme, akustischer Umgebungssignale (212) vorgesehen sind.

8. Mobile Vorrichtung nach einem der vorhergehenden Ansprüche, **dadurch gekennzeichnet, dass** der Prozessor (200) ferner dazu ausgelegt ist, während der Ausgabe erster akustischer Objektsignale (210) zweite akustische Objektsignale (211) oder/und die akustischen Umgebungssignale (212) auszugeben.

9. Mobile Vorrichtung nach einem der vorhergehenden Ansprüche, **dadurch gekennzeichnet, dass** die den akustischen Quellsignalen zugeordneten Objektpositionsdaten (170) und/oder Objektorientierungsdaten (180) personenbezogen sind.

10. System (1000) zur Verortung akustischer Signale in einem realen Raum, mit einer mobilen Vorrichtung (101, 102, 103) nach einem der vorhergehenden Ansprüche und einem Sender (401, 402, 403) in dem realen Raum, der dazu eingerichtet ist, mit der mobilen Vorrichtung (101, 102, 103) zur Erzeugung der Positionsdaten (170) zu kommunizieren, wobei insbesondere vorgesehen sein kann dass die mobile Vorrichtung für einen auf einer Anzeigefläche gezeigten Film den zum Film gehörigen Ton so als akustische Objektsignale ausgibt, dass der Ton als einer Stelle der Anzeigefläche zugehörig erscheint, an welcher der Ton zu entstehen scheint und/oder dass die Intensität des Tons abhängig von der Position beziehungsweise dem Abstand der mobilen Vorrichtung zu der Anzeigefläche ist, insbesondere zu einer Stelle der Anzeigefläche, an der der Ton zu entstehen scheint.

11. Verfahren zur Verortung akustischer Signale in einem realen Raum, mit den Schritten:
Bestimmen von Positions- und Orientierungsdaten eines Kopfhörers in einem realen Raum mittels Verarbeitung von auf Ultrabreitband-Technologie basierenden Positionssignalen und Sensorsignalen, welche die Orientierung des Kopfhörers erfassen,
Zuordnen der Position und der Orientierung des Kopfhörers in dem realen Raum einer Position und einer Orientierung in einem dem realen Raum entsprechenden virtuellen Raum,
Zuordnen von Objektpositions- und/oder Objektorientierungsdaten zu akustischen Quellsignalen;
Empfangen eines Synchronisationssignals;
Ausgeben akustischer Objektsignale an den Kopfhörer in Abhängigkeit von den Positions- und Orientierungsdaten in dem virtuellen Raum und entsprechend dem Synchronisationssignal derart, dass die akustischen Quellsignale für einen den Kopfhörer tragenden Hörer als in dem realen Raum entsprechend den Objektpositions- und/oder Objektorientierungsdaten verortet wahrnehmbar sind, wobei das Synchronisationssignal (220) eine Synchronisation der Ausgabe der akustischen Objektsignale (210, 211) mit der Ausgabe bewegter Bilddokumente (310) ermöglicht und wobei die akustischen Quellsignale, die Bildinhalten einer Szenerie der Bilddokumente zugeordnet sind, bei einer ersten Position oder/und einer ersten Orientierung des Kopfhörers andere akustische Objektsignale (210, 211) hervorrufen als bei von den ersten unterschiedlichen zweiten Positionsdaten oder/und zweiten Orientierungsdaten, sodass die akustischen Quellsignale (160) für die Bildinhalte innerhalb der Szenerie der Bilddokumente verortet erscheinen.

## Claims

1. Mobile device (100), comprising
a) a headphone (100) with two loudspeakers (111, 113),
b) a localization module (120) for generating position data (130) and orientation data (140) in dependence on the position and the orientation of the headphone (110) in a real space, comprising
i) sensors for detecting the orientation of the localization module and for outputting sensor signals,
ii) a receiver for receiving position signals, wherein the receiver is designed to receive position signals being based on ultrawideband technology,
iii) a processor which is designed to process the sensor signals and the position signals for generating position data and orientation data and
iv) an interface for outputting the position data and the orientation data,
c) a memory (150) for storing, in a virtual space, acoustic source signals (160) and object position data (170) and/or object orientation data (180) being associated with the acoustic source signals (160),
d) a processor (200) which is designed to
i) receive the position data (130) and the orientation data (140) from the localization module (120),
ii) read the acoustic source signals (160) and the object position data (170) and/or the object orientation data (180) being associated with the acoustic source signals (160) from the memory (150),
iii) output acoustic object signals (210) corresponding to the stored acoustic source signals (160) in dependence on the position data (130), the orientation data (140), the object position data (170) and/or the object orientation data (180) in a way that the stored acoustic source signals (160) appear, corresponding to the related object position data (170) and/or object orientation data (180), acoustically located to a hearer carrying a headphone (110) fed with the acoustic signals, wherein
e) the processor (200) is configured to receive a synchronization signal (220) and to output the acoustic object signals (210, 211) corresponding to the synchronization signal (220), wherein the synchronization signal (220) allows a synchronization of the output of the acoustic object signals (210, 211) with the output of moving image documents (310), and wherein
f) the processor (200) is designed to output other acoustic object signals (210, 211) for acoustic source signals (160), which are assigned to image contents of a scenery of the image documents, at first position data (130) or/and first orientation data (140) of the orientation module (120) than at second position data or/and second orientation data different from the first, so that the acoustic source signals (160) for the image contents appear located within the scenery of the image documents.

2. Mobile device according to Claim 1, **characterized in that** the object position data (170) and/or the object orientation data (180) are assignable in the virtual space to an object (300) in the real space.

3. Mobile device according to Claim 1 or 2, **characterized in that** the sensors include
a) sensors for detecting the velocity of the localization module,
b) sensors for detecting the acceleration of the localization module,
c) sensors for detecting the velocity and the acceleration of the localization module,
d) an inertial sensor system with a 3D gyroscope,
e) a 3D acceleration sensor,
f) a sensor for detecting magnetic changes,
g) a 3D magnetometer or/and
h) a barometer.

4. Mobile device according to one of the preceding Claims, wherein the localization module (120) is configured to generate the position data on the basis of the sensor signals and to align the position data thus generated with the position signals.

5. Mobile device according to one of the preceding Claims, wherein the position signals are received in dependence on a time, the position data, the orientation data or/and a channel or/and network occupancy.

6. Mobile device according to one of the preceding Claims, **characterized in that** the mobile device (100) is configured to receive and/or to send the object position data (170) and/or the object orientation data (180) from a further mobile device (101) or to a further mobile device, respectively.

7. Mobile device according to one of the preceding Claims, **characterized in that** at least a microphone (112, 114), preferably one microphone (112, 114) each near a loudspeaker (111, 113) on the headphone (110), is provided for recording, preferably for spatially resolved recording, acoustic environment signals (212).

8. Mobile device according to one of the preceding Claims, **characterized in that** the processor (200) is further designed to output second acoustic object signals (211) or/and the acoustic environment signals (212) during the output of first acoustic object signals (210).

9. Mobile device according to one of the preceding Claims, **characterized in that** the object position data (170) and/or the object orientation data (180) being assigned to the acoustic object signals are personal.

10. System for localizing acoustic signals in a real space, comprising a mobile device (101, 102, 103) according to one of the preceding Claims and a transmitter (401, 402, 403) in the real space, wherein the transmitter is configured to communicate with the mobile device (101, 102, 103) for generating the position data (170), wherein it might be particularly provided that, for a film shown on the display area, the mobile device outputs the sound associated with the film as acoustic object signals in a way as the sound appears to belong to a point of the display area where the sound appears to be arising and/or as the intensity of the sound depends on the position or the distance, respectively, of the mobile device to the display area, particularly to a point of the display area where the sound appears to be arising.

11. Method for localizing acoustic signals in a real space, comprising the steps of:
determining of position and orientation data of a headphone in a real space by means of processing of position signals and sensor signals being based on ultrawideband technology and which detect the orientation of the headphone,
assigning of the position and the orientation of the headphone in the real space of a position and an orientation in a virtual space which corresponds to the real space,
assigning of object position and/or object orientation data to acoustic source signals;
receiving of a synchronization signal;
outputting of acoustic object signals to the headphone in dependence of the position and orientation data in the virtual space and corresponding to the synchronization signal in such a way, as the acoustic source signals are perceptible by a hearer carrying the headphones as being located in the real space corresponding to object position and/or object orientation data, wherein the synchronization signal (220) allows a synchronization of the output of the acoustic object signals (210, 211) with the output of moving image documents (310) and wherein the acoustic source signals which are assigned to image contents of a scenery of the image documents evoke, at a first position or/and a first orientation of the headphone, other acoustic object signals (210, 211) than at second position data or/ and second orientation data different from the first, so that the acoustic source signals (160) appear to be localized for the image contents within the scenery of the image documents.

## Revendications

1. Dispositif mobile (100), comprenant
a) un casque d'écoute (110) avec deux haut-parleurs (111, 113),
b) un module de localisation (120) pour générer des données de position (130) et des données d'orientation (140) en fonction de la position et de l'orientation du casque d'écoute (110) dans un espace réel, comprenant
i) des capteurs pour détecter l'orientation du module de localisation et pour délivrer des signaux de capteurs,
ii) un récepteur pour recevoir des signaux de position, le récepteur étant conçu pour recevoir des signaux de position basés sur la technologie à bande ultra-large,
iii) un processeur qui est conçu pour traiter les signaux de capteurs et les signaux de position pour générer des données de position et des données d'orientation et
iv) une interface pour délivrer les données de position et les données d'orientation,
c) une mémoire (150) pour stocker des signaux acoustiques de source (160) et des données de position d'objet (170) et/ou des données d'orientation d'objet (180) associées aux signaux acoustiques de source (160) dans un espace virtuel,
d) un processeur (200) qui est conçu pour
i) recevoir les données de position (130) et les données d'orientation (140) du module de localisation (120),
ii) lire les signaux acoustiques de source (160) et les données de position d'objet (170) et/ou les données d'orientation d'objet (180) associées aux signaux acoustiques de source (160) dans la mémoire (150),
iii) en fonction des données de position (130), des données d'orientation (140), des données de position d'objet (170) et/ou des données d'orientation d'objet (180), délivrer au casque d'écoute (110) des signaux acoustiques d'objet (210) correspondant aux signaux acoustiques de source (160) stockés, de telle sorte que les signaux acoustiques de source (160) stockés apparaissent acoustiquement localisés à un auditeur portant un casque d'écoute (110) alimenté avec les signaux acoustiques de façon correspondante aux données de position d'objet (170) et/ou aux données d'orientation d'objet (180) associées, dans lequel
e) le processeur (200) est conçu pour recevoir un signal de synchronisation (220) et pour délivrer les signaux acoustiques d'objet (210, 211) de façon correspondante au signal de synchronisation (220), le signal de synchronisation (220) permettant une synchronisation de la sortie des signaux acoustiques d'objet (210, 211) avec la sortie de documents image animés (310), et dans lequel
f) le processeur (200) est conçu pour délivrer, pour des signaux acoustiques de source (160) qui sont associés à des contenus d'image d'une scène des documents image, pour des premières données de position (130) et/ou des premières données d'orientation (140) du module d'orientation (120), d'autres signaux acoustiques d'objet (210, 211) que pour des secondes données de position et/ou des secondes données d'orientation différentes des premières, de sorte que les signaux acoustiques de source (160) pour les contenus d'image à l'intérieur de la scène des documents image apparaissent localisés.

2. Dispositif mobile selon la revendication 1, **caractérisé en ce que** les données de position d'objet (170) et/ou les données d'orientation d'objet (180) dans l'espace virtuel peuvent être associées à un objet (300) dans l'espace réel.

3. Dispositif mobile selon la revendication 1 ou 2, **caractérisé en ce que** les capteurs comprennent
a) des capteurs pour détecter la vitesse du module de localisation,
b) des capteurs pour détecter l'accélération du module de localisation,
c) des capteurs pour détecter la vitesse et l'accélération du module de localisation,
d) un système de capteurs inertiels avec un gyroscope 3D,
e) un capteur d'accélération 3D,
f) un capteur pour détecter des variations magnétiques,
g) un magnétomètre 3D et/ou
c) un baromètre.

4. Dispositif mobile selon l'une des revendications précédentes, dans lequel le module de localisation (120) est conçu pour générer les données de position sur la base des signaux de capteurs et pour comparer les données de position ainsi générées avec les signaux de position.

5. Dispositif mobile selon l'une des revendications précédentes, dans lequel les signaux de position sont reçus en fonction d'un temps, des données de position, des données d'orientation et/ou d'une occupation de canal et/ou de réseau.

6. Dispositif mobile selon l'une des revendications précédentes, **caractérisé en ce que** l'appareil mobile (100) est conçu pour recevoir les données de position d'objet (170) et/ou les données d'orientation d'objet (180) d'un autre dispositif mobile (101) et/ou pour les envoyer à un autre dispositif mobile.

7. Dispositif mobile selon l'une des revendications précédentes, **caractérisé en ce qu'**au moins un microphone (112, 114), de préférence un microphone (112, 114) chaque fois à proximité d'un haut-parleur (111, 113) sur le casque d'écoute (110), est prévu pour l'enregistrement, de préférence pour l'enregistrement à résolution spatiale, de signaux acoustiques ambiants (212).

8. Dispositif mobile selon l'une des revendications précédentes, **caractérisé en ce que** le processeur (200) est en outre conçu pour délivrer, pendant qu'il délivre des premiers signaux acoustiques d'objet (210), des seconds signaux acoustiques d'objet (211) et/ou les signaux acoustiques ambiants (212).

9. Dispositif mobile selon l'une des revendications précédentes, **caractérisé en ce que** les données de position d'objet (170) et/ou les données d'orientation d'objet (180) associées aux signaux acoustiques de source sont liées à une personne.

10. Système (1000) pour localiser des signaux acoustiques dans un espace réel, comprenant un dispositif mobile (101, 102, 103) selon l'une des revendications précédentes et un émetteur (401, 402, 403) dans l'espace réel, qui est conçu pour communiquer avec le dispositif mobile (101, 102, 103) pour générer les données de position (170), dans lequel il peut en particulier être prévu que le dispositif mobile délivre, pour un film représenté sur une surface d'affichage, le son associé au film sous la forme de signaux acoustiques d'objet, que le son semble être associé à un point de la surface d'affichage auquel le son semble être produit et/ou que l'intensité du son dépende de la position ou de la distance du dispositif mobile par rapport à la surface d'affichage, en particulier par rapport à un point de la surface d'affichage auquel le son semble être produit.

11. Procédé de localisation de signaux acoustiques dans un espace réel, comprenant les étapes suivantes :
détermination de données de position et d'orientation d'un casque d'écoute dans un espace réel au moyen du traitement de signaux de position basés sur la technologie à bande ultra-large et de signaux de capteurs qui détectent l'orientation du casque d'écoute,
association de la position et de l'orientation du casque d'écoute dans l'espace réel à une position et une orientation dans un espace virtuel correspondant à l'espace réel,
association de données de position et/ou de données d'orientation d'objet à des signaux acoustiques de source ;
réception d'un signal de synchronisation ;
sortie de signaux acoustiques d'objet sur le casque d'écoute en fonction des données de position et d'orientation dans l'espace virtuel et de façon correspondante au signal de synchronisation de telle sorte que les signaux acoustiques de source puissent être perçus par un auditeur portant le casque d'écoute de manière localisée dans l'espace réel de façon correspondante aux données de position d'objet et/ou d'orientation d'objet, le signal de synchronisation (220) permettant une synchronisation de la sortie des signaux acoustiques d'objet (210, 211) avec la sortie de documents image animés (310) et les signaux acoustiques de source, qui sont associés à des contenus d'image d'une scène des documents images, provoquent, pour une première position et/ou une première orientation du casque d'écoute, d'autres signaux acoustiques d'objet (210, 211) que pour des secondes données de position et/ou des secondes données d'orientation différentes des premières, de sorte que les signaux acoustiques de source (160) pour les contenus d'images à l'intérieur de la scène des documents image apparaissent localisés.
